# EUROPÄISCHE PATENTSCHRIFT

(11) **EP 3 238 919 B1**
(45) Veröffentlichungstag und Bekanntmachung des Hinweises auf die Patenterteilung: **06.05.2020**
(21) Anmeldenummer: 16167727.3
(22) Anmeldetag: 29.04.2016
(51) Int. Cl.: B29C 65/08, B65B 7/02, B65B 51/22

(54) **RUNDLÄUFER-MASCHINE UND VERFAHREN ZUM SIEGELN VON FOLIENBEUTELN**
ROTARY MACHINE AND METHOD FOR SEALING FILM BAGS
MACHINE ROTATIVE ET PROCÉDÉ DE SCELLAGE DE SACS

(43) Veröffentlichungstag der Anmeldung: 01.11.2017
(73) Patentinhaber: INDAG Pouch Partners GmbH, 69214 Eppelheim (DE)
(72) Erfinder: Harth, Rolf, 69151 Neckarsgemünd (DE); Lechert, Frank, 69469 Weinheim (DE); Schwab, Daniel, 69124 Heidelberg (DE)
(74) Vertreter: Grünecker Patent- und Rechtsanwälte PartG mbB

(56) Entgegenhaltungen:
- EP-A1- 2 147 774
- EP-A1- 2 808 154
- EP-A1- 2 944 577
- EP-A2- 1 388 494
- EP-A2- 2 993 138
- DE-A1-102010 039 000

## Beschreibung

Die Erfindung betrifft eine Rundläufer-Maschine gemäß Oberbegriff des Patentanspruchs 1 sowie ein Verfahren gemäß Oberbegriff des Patentanspruchs 10.

Das kontinuierliche Siegeln von Folienbeuteln, beispielsweise nach deren Kalt- oder Heißbefüllung mit einem Getränk, zwischen einem Amboss und einer diesem zugeordneten Sonotrode durch Ultraschallschweißen in einer Rundläufer-Maschine ist bekannt. Das Karussell weist so viele Schweißstationen jeweils aus einem Amboss und einer Sonotrode, wie im Karussell verarbeitete Folienbeutel auf.

Eine gattungsgemäße Rundläufer-Maschine ist aus den Figuren 6 und 7 der EP 1 388 494 A2 bekannt. Das kontinuierliche Siegeln der einzelnen Folienbeutel erfolgt mit intermittierendem Betrieb des Karussells, wobei jeder an einem Amboss positionierte Folienbeutel durch die radial zum Karussell gegen den Amboss bewegte Sonotrode gesiegelt wird, während das Karussell anhält. Zwischen den in Rundlaufrichtung aufeinanderfolgenden Ambossen liegen Zwischenabstände vor.

Der Erfindung liegt die Aufgabe zugrunde, eine Rundläufer-Maschine der eingangs genannten Art sowie ein Verfahren zum Siegeln von Folienbeuteln in einem kontinuierlichen Rundlauf anzugeben, mit denen Folienbeutel mit hoher Betriebssicherheit und weitestgehend störungsfrei bei geringem baulichen Aufwand kontinuierlich siegelbar sind.

Die gestellte Aufgabe wird mit den Merkmalen des Patentanspruchs 1 und verfahrensgemäß mit den Merkmalen des Patentanspruchs 10 gelöst.

Da gegebenenfalls nur eine Sonotrode oder weitaus weniger Sonotroden als Ambosse benötigt werden, reduziert sich der bauliche Aufwand erheblich. Die zumindest relativ zur Rundlaufrichtung stationär platzierte Sonotrode kann so gestaltet oder gesteuert werden, dass das Einfädeln des vorderen Endes des am Amboss positionierten Folienbeutels zu keinen Betriebsstörungen führt. Dabei sind im Karussell in den Zwischenabständen zwischen den Ambossen mitrotierende Dummyambosse angeordnet, wobei jedoch jeder Dummyamboss einer Schweißseite der Sonotrode zugewandt, eine Kontur aufweist, die einer der Sonotrode zugewandten Kontur des Ambosses mit daran positioniertem Folienbeutel gleicht. Die Konturen der Ambosse und der Dummyambosse sind in Rundlaufrichtung fluchtend angeordnet, so dass die Siegelung, wie bei einer Endlosfoliendurchführung abläuft und das Einfädeln der in Rundlaufrichtung vorderen Enden der Folienbeutel zwischen die Sonotrode und den Amboss keine Störung hervorruft. Es kann die Sonotrode sogar, relativ zur Rundlaufrichtung und radial zum Karussell, stationär platziert sein.

Verfahrensgemäß arbeitet wenigstens eine stationäre Sonotrode mit einer Vielzahl an ihr vorbei rotierter, die Folienbeutel liefernden Ambossen zusammen, wobei der Energieeinsatz verringert ist und dennoch alle Folienbeutel hoher Qualität gesiegelt werden. Beim Vorbeirotieren jedes Dummyambosses an der Sonotrode wird die Schweißleistung gegenüber der Schweißleistung beim Vorbeirotieren des den Folienbeutel liefernden Ambosses vorübergehend verringert.

Für eine einwandfreie Siegelung kann es zweckmäßig sein, wenn der Folienbeutel in Rundlaufrichtung kürzer ist als der Amboss und, zumindest im Wesentlichen symmetrisch, an diesem positioniert ist. Ferner kann, vorzugsweise, die Schweißseite der Sonotrode kürzer als der Folienbeutel sein.

Zweckmäßig ist dabei eine Schweißseite der Sonotrode der Kontur jedes Ambosses von außerhalb des Karussells zugewandt. Die Außenseite des Ambosses, an welcher der Folienbeutel platziert ist, kann einem Kreisbogen zumindest annähernd mit dem Radius zum Zentrum des Karussells folgen. Die Schweißseite der Sonotrode kann hingegen eben sein, oder entsprechend konkav gekrümmt.

Im Hinblick auf sich gleichende Konturen und eine störungsfreie Einfädelung des vorderen Endes des Folienbeutels kann es zweckmäßig sein, wenn die Schweißseite der Sonotrode der Außenseite des Ambosses von außerhalb des Karussells zugewandt ist, und die Konturen der beiden, an jeweils einen Amboss angrenzenden Dummyambosse endseitige Stufen mit etwa der Stärke eines Folienbeutels entsprechender Tiefe aufweisen, deren jede in Rundlaufrichtung einen Abstand vom Ende des Dummyambosses hat, der in etwa der halben Längendifferenz zwischen dem Folienbeutel und dem Amboss entspricht. Über die Stufen wird die störungsfreie Einfädelung des vorderen Endes des Folienbeutels begünstigt.

In der Ausführungsform mit den Ambossen und den als Platzhalter fungierenden Dummyambossen können die Schweißseite der Sonotrode und die Außenseiten der Ambosse und der Dummyambosse Kreisbögen zumindest in etwa mit dem Radius zum Zentrum des Karussells folgend ausgebildet sein. Daraus resultiert eine gleichbleibende Spaltweite zum gleichförmigen Übertragen der Schweißleistung.

Um Störungen beim Einfädeln des in Einlaufrichtung vorneliegenden Endes des Folienbeutels zwischen die Sonotrode und den Amboss auszuschließen, ist es nach einem besonders wichtigen Gesichtspunkt zweckmäßig, wenn die Schweißseite der Sonotrode zumindest am gegen die Rundlaufrichtung weisenden Ende eine Einlaufrundung oder Einlaufschräge aufweist. Dadurch entsteht ein sich in Rundlaufrichtung verengender Schnabel, in den das vordere Ende des Folienbeutels problemlos einläuft. Im Übrigen können die Ambosse und die Dummyambosse oder die Ambosse und die Zwischenabstände in Rundlaufrichtung gleich lang sein.

Bei einer zweckmäßigen Ausführungsform ist für das Karussell wenigstens ein Drehwinkelgeber vorgesehen und mit einer Steuerung zumindest für die Schweißleistung der Sonotrode verknüpft. Über den Drehwinkelgeber ist die Steuerung darüber informiert, ob und wo gerade ein zu siegelnder Folienbeutel ist, beispielsweise um die Schweißleistung dann entsprechend zu regeln. Anstelle eines Drehwinkelgebers kann bei Verwendung eines hochwertigen elektrischen Servomotors dessen Drehwinkelinformation bekannt ist, der Servomotor die Information zum Drehwinkel liefern.

Um Problemen beim Einfädeln des vorderen Endes des Folienbeutels zwischen die Sonotrode und den Amboss zu begegnen, kann die Sonotrode über einen Antriebsmotor, beispielsweise einen Schrittmotor, beispielsweise gegen Federkraft, im Wesentlichen radial zum Karussell zwischen einer zurückgezogenen Position (beim Vorbeirotieren eines Dummyambosses, oder des Zwischenabstandes) und einer an die Ambosse angenäherten Schweißposition verstellbar sein. Diese Verstellung kann, vorzugsweise, ebenfalls über die Steuerung und mit der vom Drehwinkelgeber bereitgestellten Information erfolgen. Diese Ausführungsform ist im Falle von freien Zwischenabständen zwischen den Ambossen günstig.

Bei einer anderen Ausführungsform kann die Sonotrode relativ zum Karussell in der Schweißposition auch radial stationär positioniert sein, was den Aufwand für die Schweißstation deutlich verringert. Dies kann für die Ausführungsform mit den Dummyambossen zweckmäßig sein, bei der das Einfädeln der vorderen Enden der Folienbeutel unter anderem wegen der gleichen Konturen an den Ambossen und den Dummyambossen unproblematisch ist.

Anhand der Zeichnungen werden Ausführungsformen des Erfindungsgegenstandes erläutert. Es zeigen:
- Fig. 1: eine Schemadraufsicht einer Rundläufer-Maschine mit als nicht beschränkendes Beispiel nur einer Schweißstation,
- Fig. 2: eine Ansicht der Schweißstation in der Rundlaufrichtung,
- Fig. 3: eine Schemadraufsicht zu Fig. 2, und
- Fig. 4: eine weitere Ausführungsform mit Ambossen und gerade dazwischenliegenden Dummyambossen, in einer Schemadraufsicht als Abwicklung des runden Karussellumfangs.

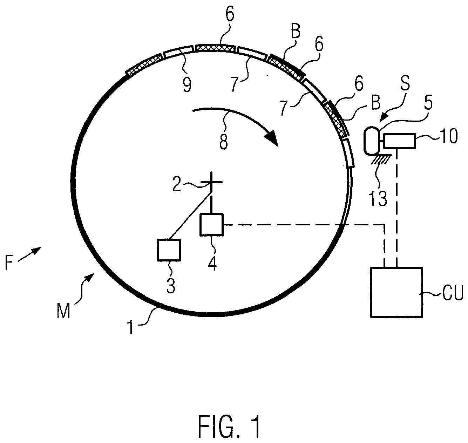

Fig. 1 ist eine Schemadraufsicht einer Rundläufer-Maschine M, beispielsweise eines Rundläufer-Füllers F, zum kontinuierlichen (Füllen und) Siegeln von Folienbeuteln B, beispielsweise für Getränke oder andere Lebensmittel. Die Folienbeutel B weisen keine Einfüll- oder Ausgieß-Glieder im Bereich der zu siegelnden Öffnungsränder des Folienbeutels auf und werden durch Ultraschallschweißen zwischen hier nur einer Sonotrode 5 und einem jeweiligen Amboss 6 gesiegelt. Dabei könnten mehrere Schweißstationen S um den Umfang eines Karussells 1 der Rundläufer-Maschine M verteilt sein, jedoch weniger als Ambosse 6 im Karussell 1.

Das Karussell 1 wird um eine Achse 2 beispielsweise durch einen elektrischen Servomotor 3 kontinuierlich angetrieben. Dabei kann ein Drehwinkelgeber 4 vorgesehen sein, der mit einer Steuerung CU verknüpft ist und Drehwinkelinformationen liefert.

Die Sonotrode 5 ist zumindest in Rundlaufrichtung 8 relativ zum Karussell 1 stationär angeordnet, so dass beim Rotieren des Karussells 1 die mit Zwischenabständen 7 entlang des Umfanges angeordneten Ambosse 6 mit daran positionierten Folienbeuteln B an der Sonotrode 5 vorbeirotiert werden.

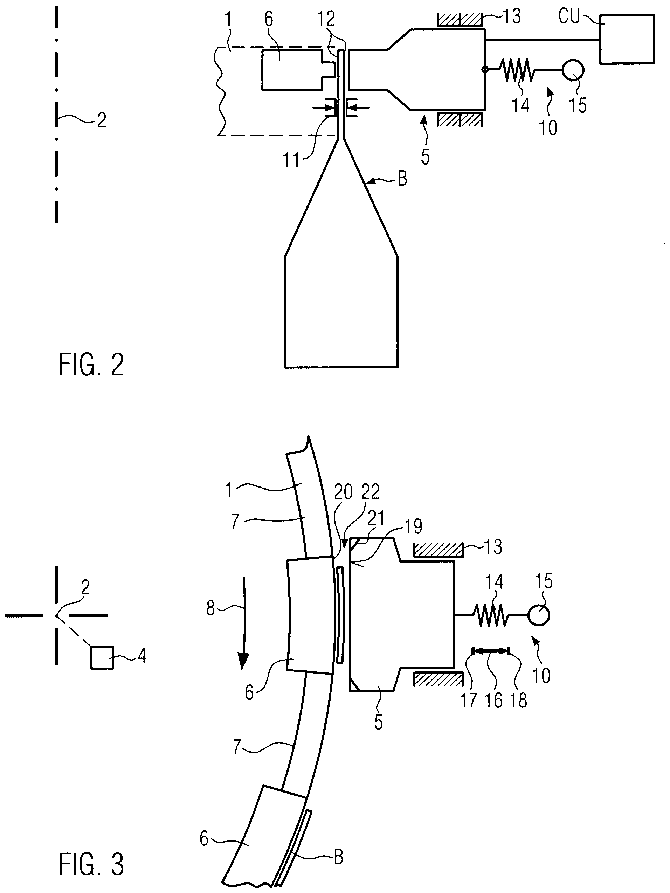

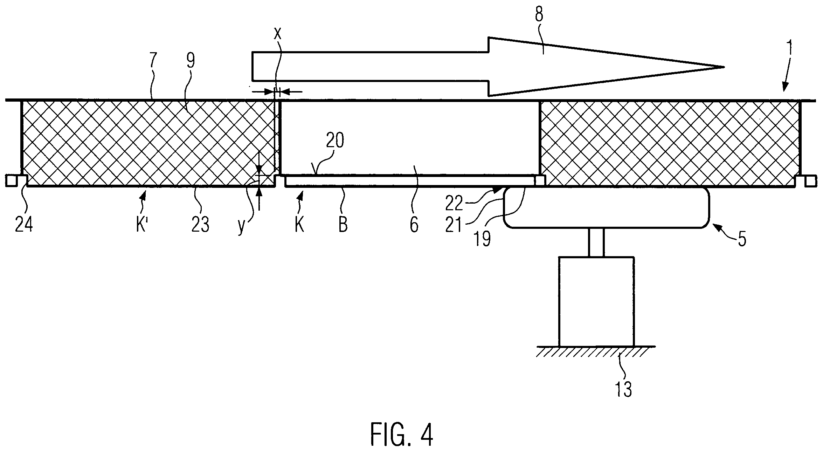

Die Zwischenabstände 7 von Fig. 1 können frei sein, wie beispielsweise in den Fig. 2 und 3 gezeigt, oder können Dummyambosse 9 als Platzhalter enthalten, wie anhand Fig. 4 erläutert.

In der Ausführungsform in Fig. 1 weist die Sonotrode 5, die eine stationäre Abstützung 13 hat, beispielsweise einen Antrieb 10 auf, der z.B. von der Steuerung CU ansteuerbar ist, und die Sonotrode 5 beispielsweise in etwa radial zum Karussell 1 hin- und her verstellt (Fig. 2 und 3).

Die Steuerung CU kann ggf. auch die Schweißleistung der Sonotrode 5 regeln und/oder variieren.

In den schematischen Detailansichten der Fig. 2 und 3 ist erkennbar, dass jeder Folienbeutel B mit seinen Öffnungsrändern 12 durch Halter 11 des Karussells 1 an dem Amboss 6 positioniert ist und von diesem nach unten hängt. Die Sonotrode 5 ist in der in Bezug auf die Rundlaufrichtung 8 stationären Lagerung 13 in etwa radial zum Karussell 1 verstellbar, und zwar beispielsweise über einen Motor 15, wie einem Schrittmotor, und ggf. eine Feder 14 als Antrieb 10, und zwar gemäß Fig. 3 in Richtung eines Doppelpfeils 16 zwischen einer an den Amboss 6 angenäherten Schweißposition 17 zu einer zurückgezogenen Position 18.

Die Außenseite 20 jedes Ambosses 6 kann einem Kreisbogen folgen mit einem Radius zur Achse 2. Eine Schweißseite 19 der Sonotrode 5 kann entweder (wie in Fig. 3 gezeigt) eben sein, oder (nicht gezeigt) einem Kreisbogen folgend konkav gekrümmt verlaufen.

Zweckmäßig ist zumindest am gegen die Rundlaufrichtung 8 weisenden Ende der Schweißseite 19 der Sonotrode 5 eine Einlaufrundung 21 oder Einlaufschräge angeformt, so dass für das vordere Ende des Folienbeutels B ein sich in Rundlaufrichtung 8 in den Spalt zwischen dem Amboss 6 und der Sonotrode 5 verengender Schnabel 22 gebildet wird. Die Zwischenabstände 7 zwischen je zwei aufeinanderfolgenden Ambossen 6 können frei bleiben. Die Zwischenabstände 7 und die Ambosse 6 können gleich lang sein. Der Folienbeutel B ist kürzer als die Außenseite 20 des Ambosses 6 und wird im Wesentlichen symmetrisch an der Außenseite 20 positioniert, so dass die Außenseite 20 in Rundlaufrichtung 8 hinten und vorne über den Folienbeutel B vorsteht. Die Schweißseite 19 der Sonotrode 5 ist in Fig. 3 z.B. länger als die Außenseite 20 des Ambosses 6, jeweils in Rundlaufrichtung 8 gesehen.

Über den Motor 15 und/oder die Feder 14 kann die Sonotrode 15 in der stationären Lagerung 13 beim Vorbeirotieren eines Zwischenabstandes 7 oder kurz vor Einfädeln des vorderen Endes des Folienbeutels B zwischen den Amboss 6 und die Sonotrode 5 vorübergehend zurückgezogen und dann wieder in die Schweißposition 17 gebracht werden. Ferner kann beim Vorbeirotieren des Zwischenabstandes die Schweißleistung der Sonotrode 5 vorübergehend verringert oder abgeschaltet werden.

In der Ausführungsform in Fig. 4 sind in den Zwischenabständen 7 Dummyambosse 9 als Platzhalter angeordnet. Die Dummyambosse 9 und die Ambosse 6 können gleich lang sein und folgen z.B. im Wesentlichen übergangslos aufeinander. Hier kann die Sonotrode auch in radialer Richtung bezüglich des Karussells 1 stationär angeordnet sein, beispielsweise in der Lagerung 13'.

Ein wesentlicher Gesichtspunkt der Ausführungsform der Fig. 4 besteht darin, dass jeder Dummyamboss 9 mit seiner Außenseite 23 eine Kontur K' hat, die der Kontur K des Ambosses 6 mit an der Außenseite 20 positionierten Folienbeutel B gleicht, wobei die Konturen K' und K in Rundlaufdrehrichtung 8 miteinander fluchten. Hierbei empfiehlt es sich, an der Schweißseite 19 der Sonotrode 5 eine Einlaufrundung 21 vorzusehen, die den Schnabel 22 zum störungsfreien Einfädeln der Folienbeutel B definiert.

Die Kontur K' jedes Dummyambosses 9 wird definiert durch eine beispielsweise einem Kreisbogen (nicht gezeigt) mit dem Radius bezogen auf das Zentrum 2 des Karussells 1 folgender Außenseite 23 und einer Stufe 24 an jedem Ende des Dummyambosses 9. Die Stufe 24 kann eine Tiefe y entsprechend der Stärke des Folienbeutels B haben, und einen Abstand x vom Ende des Dummyambosses 9 entsprechend etwa der halben Längendifferenz zwischen dem Folienbeutel B und dem Amboss 6.

Alternativ kann auch in der Ausführungsform in Fig. 4 die Sonotrode 5, wie in den Fig. 2 und 3 hin- und herverstellt werden, beispielsweise beim Vorbeirotieren eines Dummyambosses 9. Die in relativ zur Rundlaufrichtung 8 und radial stationäre Lagerung der Sonotrode 5 ist zweckmäßig, da der zusätzliche Antrieb 10 und dessen Steuerung entfallen.

In der Ausführungsform in Fig. 4 kann beispielsweise das Karussell mit einer Drehzahl rotieren, aus der sich eine Relativgeschwindigkeit von mehr als 10 m pro Minute ergibt. Die Sonotrode kann beispielsweise mit einer Leistung von 600 Watt oder mehr und einer Frequenz von 35 kHz oder mehr betrieben werden.

## Patentansprüche

1. Rundläufer-Maschine (M), insbesondere Rundläufer-Füller (F), zumindest zum kontinuierlichen Siegeln einzelner Folienbeutel (B) durch Ultraschallschweißen zwischen einem Amboss (6) und einer Sonotrode (5) in zumindest einer einem drehangetriebenen Karussell (1) zugeordneten Schweißstation (S), wobei jeder Folienbeutel (B) beim Rundlauf durch Halter (11) positionierbar ist, **wobei** die Rundläufer-Maschine (M) wenigstens eine Schweißstation (S) aufweist, die eine zumindest relativ zur Rundlaufrichtung (8) des Karussells (1) stationär platzierte Sonotrode (5) und mit Zwischenabständen (7) in Rundlaufrichtung (8) aufeinanderfolgend im Karussell (1) an der Sonotrode (5) vorbei rotierbare Ambosse (6) umfasst, an denen die Folienbeutel (B) positioniert sind, **dadurch gekennzeichnet, dass** im Karussell (1) in den Zwischenabständen (7) zwischen den Ambossen (6) mitrotierende Dummyambosse (9) angeordnet sind, dass jeder Dummyamboss (9) einer Schweißseite (19) der Sonotrode (5) zugewandt eine Kontur (K') aufweist, die einer der Sonotrode (5) zugewandten Kontur (K) einer Außenseite (20) des Ambosses (6) mit daran positioniertem Folienbeutel (B) gleicht, und dass die Ambosse (6) und die Dummyambosse (9) mit in Rundlaufrichtung (8) fluchtenden Konturen (K', K) angeordnet sind.

2. Rundläufer-Maschine nach Anspruch 1, **dadurch gekennzeichnet, dass** der am Amboss (6), vorzugsweise symmetrisch, positionierte Folienbeutel (B) in Rundlaufrichtung (8) kürzer ist als der Amboss (6), und dass, vorzugsweise, die Schweißseite (19) der Sonotrode (5) kürzer ist als der Folienbeutel (B).

3. Rundläufer-Maschine nach Anspruch 1, **dadurch gekennzeichnet, dass** die Schweißseite (19) der Sonotrode (5) der Außenseite (20) jedes Ambosses (6) von außerhalb des Karussells (1) zugewandt ist, dass die Außenseite (20) des Ambosses (6) einem Kreisbogen zumindest annähernd mit dem Radius zum Zentrum (2) des Karussells (1) folgt, und dass die Schweißseite (19) der Sonotrode (5) eben oder konkav ist.

4. Rundläufer-Maschine nach Anspruch 2, **dadurch gekennzeichnet, dass** die Schweißseite (19) der Sonotrode (5) der Außenseite (20) des Ambosses (6) von außerhalb des Karussells (1) zugewandt ist, und dass die Konturen (K') der beiden an jeweils einen Amboss (6) angrenzenden Dummyambosse (9) endseitige Stufen (24) mit etwa der Stärke eines Folienbeutels (B) entsprechender Tiefe (y) aufweisen, deren jede in Rundlaufrichtung (8) einen Abstand (x) vom Ende des Dummyambosses (9) hat, der in etwa der halben Längendifferenz zwischen dem Folienbeutel (B) und dem Amboss (6) entspricht.

5. Rundläufer-Maschine nach Anspruch 1, **dadurch gekennzeichnet, dass** die Schweißseite (19) der Sonotrode (5) und die Außenseiten (20, 23) der Ambosse (6) und der Dummyambosse (9) Kreisbögen mit in etwa zumindest dem Radius zum Zentrum (2) des Karussells (1) folgend ausgebildet sind.

6. Rundläufer-Maschine nach wenigstens einem der vorhergehenden Ansprüche, **dadurch gekennzeichnet, dass** die Schweißseite (19) der Sonotrode (5) zumindest am gegen die Rundlaufrichtung (8) des Karussells (1) weisenden Ende eine Einlaufrundung (21) oder Einlaufschräge aufweist, und dass, vorzugsweise, die Ambosse (6) und die Dummyambosse (9) oder die Ambosse (6) und die Zwischenabstände (7) in Rundlaufrichtung (8) gleich lang sind.

7. Rundläufer-Maschine nach wenigstens einem der vorhergehenden Ansprüche, **dadurch gekennzeichnet, dass** für das Karussell (1) wenigstens ein Drehwinkelgeber (4) vorgesehen ist und mit einer Steuerung (CU) zumindest für die Schweißleistung der Sonotrode (5) verknüpft ist.

8. Rundläufer-Maschine nach Anspruch 1, **dadurch gekennzeichnet, dass** die Sonotrode (5) über einen Antriebsmotor, vorzugsweise einen Schrittmotor (15) und eine Feder (14), im Wesentlichen radial zum Karussell (1) zwischen einer zurückgezogenen Position (18) und einer an die Ambosse (6) angenäherten Schweißposition (17) verstellbar ist, vorzugsweise über eine mit einem Drehwinkelgeber (4) des Karussells (1) verknüpfte Steuerung (CU).

9. Rundläufer-Maschine nach Anspruch 1, **dadurch gekennzeichnet, dass** die Sonotrode (5) mit ihrer Schweißseite (19) relativ zum Karussell (1) in einer Schweißposition (17) radial stationär platziert ist.

10. Verfahren zum kontinuierlichen Siegeln einzelner Folienbeuteln (B) in einem Karussell (1) einer Rundläufer-Maschine (M) durch Ultraschweißen zwischen einer Sonotrode (5) und einem Amboss (6) in wenigstens einer dem Karussell (1) zugeordneten Schweißstation (S), **wobei** eine der Anzahl der Folienbeutel (B) im Karussell (1) entsprechende Anzahl in Rundlaufrichtung (8) mit Zwischenabständen (7) hintereinanderliegender Ambosse (6), an denen je ein Folienbeutel (B) positioniert ist, an der relativ zur Rundlaufrichtung (8) stationär angeordneten Sonotrode (5) wenigstens einer Schweißstation (S) vorbeirotiert und dabei die Folienbeutel (B) versiegelt werden, **dadurch gekennzeichnet, dass** in jedem Zwischenabstand (7) zwischen zwei Ambossen (6) ein Dummyamboss (9) angeordnet ist, der der Sonotrode (5) zugewandt eine Kontur (K') aufweist, welche der Kontur (K) des Ambosses (6) mit daran positioniertem Folienbeutel (B) gleicht, und dass beim Vorbeirotieren des Dummyambosses (9) an der Sonotrode (5) die Schweißleistung gegenüber der Schweißleistung beim Vorbeirotieren des Ambosses (6) vorübergehend verringert wird.

## Claims

1. Rotary machine (M), in particular rotary filling machine (F), at least for continually sealing single film bags (B) by ultrasonic welding between an anvil (6) and a sonotrode (5) in at least one welding station (S) allocated to a rotary-driven carousel (1), wherein each film bag (8) is positioned during a rotation by holders (11), and wherein the rotary machine (M) comprises at least one welding station (S), which comprises at least one sonotrode (S) placed stationarily relative to the rotation direction (8) of the carousel (1), and has anvils (6) which rotate consecutively and with intermediate distances (7) in rotary direction (8) past the sonotrode (5), at which anvils (6) the film bags (B) are positioned, **characterized in that** in the carousel (1) in the intermediate distances (7) between the anvils (6) dummy-anvils (9) are provided such that they rotate with the anvils (6), that each dummy-anvil (9) has a contour (K') facing a welding side (19) of the sonotrode (5), the contour of the dummy-anvil (9) equaling a contour (K) of an outer side (20) of the anvil (6) with a film bag (B) positioned at the outer side (20) and facing the sonotrode (5), and that the anvils (6) and the dummy-anvils (9) are arranged such that their contours (K', K) are aligned in rotary direction (8).

2. Rotary machine according to claim 1, **characterized in that** the film bag (B) positioned at the anvil (6), preferably positioned symmetrically, is shorter in rotary direction (8) than the anvil (6), and that, preferably, the welding side (19) of the sonotrode (5) is shorter than the film bag (B).

3. Rotary machine according to claim 1, **characterized in that** the welding side (19) of the sonotrode (5) faces the outer side (20) of each anvil (6) from the outer side of the carousel (1), that the outer side (20) of the anvil (6) follows a circular arc at least substantially with a radius to the center (2) of the carousel (1), and that the welding side (19) of the sonotrode (5) either is planar or concave.

4. Rotary machine according to claim 2, **characterized in that** the welding side (19) of the sonotrode (5) faces the outer side (20) of the anvil (6) from the outer side of the carousel (1), and that the contours (K') of both dummy-anvils (9) placed adjacent to a respective anvil (6) comprise steps (24) with a depth (y) corresponding about with the thickness of a film bag (B), each step (25) having a distance (x) in rotary direction (8) from the end of the dummy-anvil (9), said distance corresponding substantially with half of the length difference between the film bag (B) and the anvil (6).

5. Rotary machine according to claim 1, **characterized in that** the welding side (19) of the sonotrode (5) and the outer sides (20, 23) of the anvils (6) and of the dummy-anvils (9) follow circular arcs with about at least the radius to the center (2) of the carousel (1).

6. Rotary machine according to at least one of the preceding claims, **characterized in that** the welding side (19) of the sonotrode (5) has an entry curvature (21) on entry ramp at least at an end facing counter to the rotary direction (8) of the carousel (1), and that, preferably, the anvils (6) and the dummy-anvils (9) or the anvils (6) and the intermediate distances (7) are of equal length in rotary direction (8).

7. Rotary machine according to at least one of the preceding claims, **characterized in that** at least one rotary angle sensor (4) is provided for the carousel (1) and is linked with a control (CU) at least for the welding power of the sonotrode (5).

8. Rotary machine according to claim 1, **characterized in that** the sonotrode (5) is adjustable by a driving motor, preferably a step motor (15) and a spring (14), substantially radially to the carousel (1) between a retracted position (18) and a welding position (17) close to the anvils (6), preferably via a control (CU) linked to the rotary angle sensor (4) of the carousel (1).

9. Rotary machine according to claim 1, **characterized in that** the sonotrode (5) is placed radially stationarily with its welding side (19) in a welding position (17) relative to the carousel (1).

10. Method for continuously sealing single film bags (B) in a carousel (1) of a rotary machine (M) by ultrasonic welding between a sonotrode (5) and an anvil (6) in at least one welding station (S) allocated to the carousel (1), wherein a number of anvils (6), the number corresponding with the number of film bags (B) in the carousel (1), is positioned in rotary direction (8) behind each other with intermediate distances (7), while a respective film bag (B) is positioned at each of the anvils (6), the number of anvils (6) rotating past a sonotrode (5) arranged in a welding station (S) stationarily in relation to the rotary direction (8) such that then the film bags (B) are sealed, **characterized in that** a dummy-anvil (9) is arranged in each intermediate distance (7) between two anvils (6), the dummy-anvil (9) having a contour (K') facing the sonotrode (5), which contour (K') being substantially equal to the contour (K') of the anvil (6) with the film bag (B) positioned at the anvil (6), and that during the rotation of a dummy-anvil (9) past the sonotrode (5), the welding power temporarily is reduced in comparison to the welding power when the anvil (6) is rotating past the sonotrode (5).

## Revendications

1. Machine rotative (M), en particulier machine de remplissage rotative (F), au moins pour le scellage continu en sacs (B) individuels par soudage par ultrasons entre une enclume (6) et une sonotrode (5) dans au moins un poste de soudure (S) associé à un carrousel (1) entraîné en rotation, dans laquelle chaque sac (B) peut être positionné par des supports (11) pendant la rotation, dans laquelle la machine rotative (M) comporte au moins un poste de soudure (S) qui comprend une sonotrode (5) placée de manière fixe au moins par rapport au sens de rotation (8) du carrousel (1) et des enclumes (6) qui peuvent être mises en rotation dans le carrousel (1) devant la sonotrode (5) avec des distances intermédiaires (7) dans le sens de rotation (8), sur lequel sont positionnés les sacs (B), **caractérisé en ce que** des enclumes factices (9) tournant ensemble sont disposées dans le carrousel (1) aux distances intermédiaires (7) entre les enclumes (6), **en ce que** chaque enclume factice (9) présente un contour (K') tourné vers un côté soudure (19) de la sonotrode (5), qui ressemble à un contour (K) tourné vers la sonotrode (5) d'un côté extérieur (20) de l'enclume (6) avec un sac (B) placé dessus, et **en ce que** les enclumes (6) et les enclumes factices (9) sont disposées avec des contours (K', K) alignés dans le sens de la rotation (8).

2. Machine rotative selon la revendication 1, **caractérisée en ce que** le sac (B) positionné sur l'enclume (6), de préférence symétriquement, est plus court que l'enclume (6) dans le sens de rotation (8), et **en ce que** de préférence le côté soudure (19) de la sonotrode (5) est plus court que le sac (B).

3. Machine rotative selon la revendication 1, **caractérisée en ce que** le côté soudure (19) de la sonotrode (5) est tourné vers l'extérieur (20) de chaque enclume (6) depuis l'extérieur du carrousel (1), **en ce que** l'extérieur (20) de l'enclume (6) suit un arc de cercle au moins approximativement avec le rayon vers le centre (2) du carrousel (1), et **en ce que** le côté soudure (19) de la sonotrode (5) est plat ou concave.

4. Machine rotative selon la revendication 2, **caractérisée en ce que** la surface soudure (19) de la sonotrode (5) est tournée vers l'extérieur (20) de l'enclume (6) depuis l'extérieur du carrousel (1), et **en ce que** les contours (K') des deux enclumes factices (9), chacune adjacente à une enclume (6), présentent des gradins terminaux (24) d'une profondeur (y) correspondant approximativement à l'épaisseur d'un sac (B), chaque gradin (24) présentant une distance (x) de l'extrémité de l'enclume factice (9) dans le sens de rotation (8) qui correspond approximativement à la moitié de la différence de longueur entre le sac (B) et l'enclume (6).

5. Machine rotative selon la revendication 1, **caractérisée en ce que** les cordons de soudure (19) de la sonotrode (5) et les côtés extérieurs (20, 23) des enclumes (6) et des enclumes factices (9) sont formés en arcs de cercle dont le rayon suit approximativement au moins le rayon du centre (2) du carrousel (1).

6. Machine rotative selon au moins une des revendications précédentes, **caractérisée en ce que** le côté soudure (19) de la sonotrode (5) présente un arrondi d'entrée (21) ou un chanfrein d'entrée au moins à l'extrémité dirigée à l'opposé du sens de rotation (8) du carrousel (1), et **en ce que**, de préférence, les enclumes (6) et les enclumes factices (9) ou les enclumes (6) et les distances intermédiaires (7) sont de même longueur dans le sens de rotation (8).

7. Machine rotative selon au moins l'une des revendications précédentes, **caractérisée en ce qu'**il est prévu au moins un capteur d'angle de rotation (4) pour le carrousel (1) et est relié à une unité de commande (CU) au moins pour la puissance de soudure de la sonotrode (5).

8. Machine rotative selon la revendication 1, **caractérisée en ce que** la sonotrode (5) peut être réglée sensiblement radialement par rapport au carrousel (1) entre une position rétractée (18) et une position soudure (17) proche des enclumes (6) au moyen d'un moteur d'entra nement, de préférence un moteur pas à pas (15) et un ressort (14), de préférence au moyen d'une unité de commande (CU) reliée à un codeur rotatif (4) du carrousel (1).

9. Machine rotative selon la revendication 1, **caractérisée en ce que** la sonotrode (5) est placée avec son côté soudure (19) stationnaire par rapport au carrousel (1) dans une position soudure (17).

10. Procédé pour le soudage en continu de sacs (B) individuels dans un carrousel (1) d'une machine rotative (M) par soudage par ultrasons entre une sonotrode (5) et une enclume (6) dans au moins un poste de soudure (S) associé au carrousel (1), dans lequel un nombre correspondant au nombre de sacs (B) dans le carrousel (1) est pourvu, dans le sens de rotation (8), d'écartements (7) d'enclumes (6) situées les unes derrière les autres, sur lesquelles est positionné un sac (B) respectif, la sonotrode (5) d'au moins une station soudure (S), qui est disposée de manière statique par rapport au sens de rotation (8), est tournée et les sacs (B) sont alors scellés, **caractérisé en ce qu'**une enclume factice (9) est disposée à chaque distance intermédiaire (7) entre deux enclumes (6), qui fait face à la sonotrode (5) et qui a un contour (K') similaire au contour (K) de l'enclume (6) avec un sachet en aluminium (B) placé dessus, et **en ce que**, lorsque l'enclume factice (9) tourne devant la sonotrode (5), la puissance de soudure est temporairement réduite par rapport à la puissance de soudure lorsque l'enclume (6) tourne vers l'avant.
